(19) Europäisches Patentamt
European Patent Office
Office européen des brevets

(11) **EP 4 267 992 B1**

(12) **EUROPÄISCHE PATENTSCHRIFT**

(45) Veröffentlichungstag und Bekanntmachung des Hinweises auf die Patenterteilung:
**24.09.2025 Patentblatt 2025/39**

(21) Anmeldenummer: **21823179.3**

(22) Anmeldetag: **16.11.2021**

(51) Internationale Patentklassifikation (IPC):
*G01S 19/45* (2010.01)      *G01S 19/47* (2010.01)
*B60W 40/12* (2012.01)      *B60W 50/00* (2006.01)

(52) Gemeinsame Patentklassifikation (CPC):
**B60W 40/12; G01S 19/393;** B60W 2050/0031;
B60W 2520/14; B60W 2520/28; B60W 2530/18;
B60W 2530/201; B60W 2556/50; G01S 19/14;
G01S 19/48

(86) Internationale Anmeldenummer:
**PCT/DE2021/200188**

(87) Internationale Veröffentlichungsnummer:
**WO 2022/135636 (30.06.2022 Gazette 2022/26)**

(54) **VERFAHREN UND ELEKTRONISCHES KONTROLLSYSTEM ZUM ERMITTELN EINER GEFAHRENEN WEGSTRECKE EINES FAHRZEUGS**

METHOD AND ELECTRONIC CONTROL SYSTEM FOR ASCERTAINING A DISTANCE TRAVELLED BY A VEHICLE

PROCÉDÉ ET SYSTÈME DE COMMANDE ÉLECTRONIQUE POUR L'ÉVALUATION D'UNE DISTANCE PARCOURUE PAR UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.12.2020 DE 102020216465**

(43) Veröffentlichungstag der Anmeldung:
**01.11.2023 Patentblatt 2023/44**

(73) Patentinhaber: **Continental Automotive Technologies GmbH**
**30175 Hannover (DE)**

(72) Erfinder:
• **YOUSSEF, Mohanad**
  **81739 München (DE)**
• **BRETZIGHEIMER, Kai**
  **81739 München (DE)**

(74) Vertreter: **Aumovio Corporation**
**Continental Automotive**
**Technologies GbH**
**Putzbrunner Straße 69**
**81739 München (DE)**

(56) Entgegenhaltungen:
**DE-A1- 102017 002 637     DE-A1- 102017 011 029**
**DE-A1- 102018 222 152**

• **LUNDQUIST CHRISTIAN ET AL: "Tire Radii Estimation Using a Marginalized Particle Filter", IEEE TRANSACTIONS ON INTELLIGENT TRANSPORTATION SYSTEMS, IEEE, PISCATAWAY, NJ, USA, vol. 15, no. 2, 1 April 2014 (2014-04-01), pages 663 - 672, XP011544628, ISSN: 1524-9050, [retrieved on 20140404], DOI: 10.1109/TITS.2013.2284930**

EP 4 267 992 B1

**Beschreibung**

[TECHNISCHES GEBIET]

Die vorliegende Erfindung betrifft ein Verfahren zum Ermitteln einer gefahrenen Wegstrecke eines Fahrzeugs sowie ein korrespondierendes Fahrzeugsystem.

[TECHNISCHER HINTERGRUND]

Beispielsweise ist für automatisierte Fahrzeugsysteme die Bestimmung der aktuellen Position des betreffenden Fahrzeugs notwendig, um das Fahrzeug auf der geplanten Trajektorie automatisiert zur finalen Parkposition zu navigieren. Üblicherweise wird zur Bestimmung der Geschwindigkeit des Fahrzeugs die mittels eines GNSS Systems erfasste Geschwindigkeit und die mittels Raddrehzahlsensoren erfasste Geschwindigkeit fusioniert, sog. Koppelnavigation. Zur Bestimmung der Geschwindigkeit mit Raddrehzahlsensoren werden beispielsweise Pulse unter Verwendung eines Encoder-Rades erfasst. Die zurückgelegte Wegstrecke bzw. die Schnelligkeit des Fahrzeugs lässt sich anhand der erfassten Impulse nun bei Kenntnis des Radumfangs bestimmen.

Allerdings ist zu berücksichtigen, dass der Reifenumfang sich zum Beispiel in Abhängigkeit des Reifendrucks sowie im Falle eines Wechsels zwischen Sommer- und Winterbereifung ändert. Im Falle des Wechsels zwischen Sommer- und Winterbereifung kann sich eine Änderung von beispielsweise 3% ergeben, woraus ein Fehler resultiert, der bereits als zu hoch im Vergleich zu den Anforderungen moderner automatisierter Parksysteme hinsichtlich der Positionserfassung zu qualifizieren ist.

DE 10 2016 103 637 A1 betrifft ein Fahrzeug-Einparkhilfesystem und ein Einparkverfahren, bei denen eine mittels GPS bestimmte Geschwindigkeit und eine Radgeschwindigkeit für die Schätzung eines Reifenradius herangezogen werden. Dieser Ansatz ist insofern nachteilbehaftet, als dass ein GPS Geschwindigkeitssignal bei niedrigen Geschwindigkeiten rauschbehaftet und erst bei höheren Geschwindigkeiten für eine Auswertung geeigneter ist.

XP011544628 'Tire Radii Estimation Using a Marginalized Particle Filter' von Lundquist et al. bezieht sich auf die Verwendung eines Partikel-Filters zusammen mit einem erweiterten Kalman-Filter. Unbkannte Raddurchmesser beeinflussen die erwartete Fahrzeug-Trajektorie, daher werden Radumdrehungen zusammen mit der GPS-Trajektorie verwendet.

DE102017002637A1 bezieht sich auf die Ermittlung der Eigenbewegung eines Fahrzeugs. Mittels wenigstens zwei unterschiedlicher Sensoren werden unterschiedliche Messgrößen erfasst, werden mittels eines Fusions-Filters fusioniert und zur Bestimmung der Eigenbewegung des Fahrzeugs (10) verwendet, wobei mittels des Fusions-Filters ein beeinträchtigender Messfehler der Messwerte minimiert wird. GPS-Positionsdaten gehen in den Filter ein.

DE102018222152A1 bezieht sich auf das Ermitteln eines dynamischen Reifenumfangs eines Fortbewegungsmittels. Ein Kalman-Filter dient zur Bestimmung des dynamischen Reifenumfangs, als Messsignal dient u.a. die GPS-Position.

DE102017011029A1 bezieht sich auf die Korrektur einer ermittelten Geschwindigkeit eines Fahrzeugs, wobei mittels GPS ein zweiter Geschwindigkeitswert ermittelt wird. Eine Kalman-basierte Geschwindigkeitsschätzung wird besprochen.

Derzeit übliche Systeme, welche den Radumfang unter Verwendung von mittels eines GNSS-Systems erfasster Geschwindigkeit bestimmen, erfordern, dass das Fahrzeug schneller als 80 km/h fährt, um eine hinreichende Bestimmungsgenauigkeit zu erzielen, welche anschließend auch für niedrigere Geschwindigkeit angewendet wird. Dies ist bereits aus dem Grunde nachteilig, da nach einem Reifenwechsel üblicherweise ein automatisiertes Fahrmanöver ausgeführt werden soll, bevor das Fahrzeug die erforderliche Geschwindigkeit auf einer entsprechenden Straße fährt. Wird also der Reifenumfang auf Basis einer mittels eines GNSS-Systems erfassten Geschwindigkeit und mittels der Raddrehzahlen bestimmt, ist die Genauigkeit für derzeitige Systeme nicht ausreichend. Darüber hinaus ist bei höheren Geschwindigkeiten der Reifenradius jedoch aufgrund von Temperatureffekten größer als bei niedrigen Geschwindigkeiten. Bei niedrigen Geschwindigkeiten ist der Reifenradius und damit der Reifenumfang geringer als bei höheren Geschwindigkeiten, womit die Genauigkeit der Ermittlung der zurückblicken Wegstrecke bzw. der Geschwindigkeit des Fahrzeugs für niedrige Geschwindigkeiten abnimmt und insbesondere die Genauigkeitsanforderungen moderner Systeme zur Ausführung automatisierter Fahrmanöver für niedrige Geschwindigkeiten nicht erfüllbar sind.

Als Aufgabe der Erfindung kann es angesehen werden insbesondere für niedrige Fahrzeuggeschwindigkeiten eine verbesserte Genauigkeit bei der Ermittlung einer gefahrenen Wegstrecke oder Position eines Fahrzeugs zu ermöglichen.

Die Aufgabe wird durch die Gegenstände der unabhängigen Ansprüche gelöst. Weiterbildende Ausführungsformen sind in den abhängigen Ansprüchen beschrieben.

Gemäß einem ersten Aspekt der Offenbarung wird ein Verfahren zum Ermitteln einer gefahrenen Wegstrecke eines Fahrzeugs beschrieben, aufweisend die Schritte:

- Ausführung eines Prädiktionsschritts eines Kalman-Filters zur Prädiktion einer prädizierten gefahrenen Wegstrecke des Fahrzeugs unter Heranziehung einer Rotationswinkeländerung von zumindest einem rechten Rad und/oder zumindest einem linken Rad des Fahrzeugs für eine bestimmte Zeitdauer während einer Fahrt des Fahrzeugs sowie eines ermittelten Radius des rechten Rades und/oder ermittelten Umfangs des rechten Rades des Fahrzeugs und/oder eines ermittelten Radius des linken Rades und/oder ermittelten Umfangs des linken Rades des Fahrzeugs;
- Ausführung eines Korrekturschritts des Kalman-Filters zur Korrektur der prädizierten gefahrenen Wegstrecke zum Ermitteln der gefahrenen Wegstrecke des Fahrzeugs unter Heranziehung der prädizierten gefahrenen Wegstrecke und eines örtlichen Abstands zwischen zumindest zwei innerhalb der bestimmten Zeitdauer mit einem zeitlichen Abstand während der Fahrt des Fahrzeugs erfassten absoluten Positionen des Fahrzeugs.

Unter absoluten Positionen, welche insbesondere unter Verwendung eines GNSS (Globalen Satellitennavigationssystems) ermittelt werden, seien insbesondere Positionen in Koordinaten eines globalen Koordinatensystems, wie beispielsweise WGS84, verstanden. Odometriekoordinaten sind im Unterschied hierzu häufig in einem lokalen Fahrzeugkoordinatensystem dargestellt. Grundsätzlich können im Rahmen der Offenbarung unterschiedliche Radien eines Rades zugrunde gelegt werden. Unter den jeweiligen ermittelten Radien des rechten und linken Rades seien vorliegend insbesondere die jeweiligen dynamischen Rollradien verstanden. Der dynamische Rollradius berechnet sich insbesondere fiktiv aus dem Abrollumfang eines Rades, wobei der dynamische Rollradius beispielsweise gemäß DIN den Abstand der Radmitte von der Fahrbahnoberfläche beschreibt, wenn das Fahrzeug 60 km/h fährt.

Das Fahrzeug kann ein Kraftfahrzeug, insbesondere ein Personenkraftfahrzeug, ein Lastkraftfahrzeug, ein Motorrad, ein Elektrokraftfahrzeug oder ein Hybridkraftfahrzeug, ein Wasserfahrzeug oder ein Luftfahrzeug sein.

Durch das beschriebene Verfahren kann die gefahrene Wegstrecke und/oder Position eines Fahrzeugs mit verbesserter Genauigkeit insbesondere für oder bei vergleichsweise niedrigen Geschwindigkeiten ermittelt werden.

Zugrundeliegender Gedanke ist es bei Einhaltung der Genauigkeitsanforderungen moderner Systeme den Reifenumfang bei vergleichsweise niedrigen Geschwindigkeiten insbesondere zwischen 0-80 km/h bzw. 20-80 km/h zu bestimmen. Anstatt wie sonst üblich die mittels GNSS erfasste Geschwindigkeit heranzuziehen, werden die mittels GNSS erfassten absoluten Positionen herangezogen. Ein mittels GNSS erfasstes Geschwindigkeitssignal ist vergleichsweise schlecht auswertbar, im Besonderen bei vergleichsweise geringen Geschwindigkeiten, und bietet keine ausreichende Genauigkeit zur Bestimmung des Radumfangs, welcher jedoch beispielsweise für automatisierte Einparksysteme bzw. Einparkassistenten erforderlich ist. Dabei kann nicht davon ausgegangen werden, dass das Fahrzeug bereits mit einer Geschwindigkeit von größer 80 km/h gefahren ist, womit häufig eine Umfangsbestimmung auf Basis der mittels GNSS erfassten Geschwindigkeit mit hinreichender Genauigkeit ermöglicht würde. Mit den genaueren Werten der Radumfänge kann die Position des Fahrzeugs ebenfalls mit einer höheren Genauigkeit beispielsweise bei Verwendung von Koppelnavigation ermittelt werden.

Die mittels GNSS erfasste Startposition und die Fahrtrichtung sind häufig unterschiedlich im Vergleich zur Odometrie, da die Fahrtrichtung bei der Bestimmung mittels GNSS erst bei Vorliegen mehrerer Messungen in Bewegung bestimmbar ist. Weiterbildungsgemäß wird daher vor einer Fusion durch das Kalman-Filter der Daten aus Odometrie und den absoluten Koordinaten eine Koordinatentransformation vorgenommen.

Ausgehend vom Abstand der ermittelten absoluten Positionen wird entsprechend einer Ausführungsform die zurückgelegte Wegstrecke des Fahrzeugs bestimmt, welche üblicherweise unabhängig von der Fahrtrichtung ist. Beispielsweise entspricht die zurückgelegte Wegstrecke des Fahrzeugs für eine betrachtete Zeitdauer, in welcher zwei Positionen mittels GNSS erfasst werden, demnach dem Abstand der zwei zeitlich aufeinanderfolgend erfassten absoluten Positionen. Zweckmäßigerweise wird die zurückgelegte Wegstrecke dabei durch Kumulation der Distanz zwischen den zumindest zwei mittels GNSS ermittelten Positionen bestimmt. Entsprechend kann die zurückgelegte Wegstrecke durch Kumulation der Distanz zwischen einer größeren Anzahl von mittels GNSS ermittelten Positionen bestimmt werden.

Entsprechend zumindest einer Ausführungsform wird der ermittelte Radius und/oder der ermittelte Umfang des rechten Rades des Fahrzeugs anhand eines hinterlegten Radius und/oder hinterlegten Umfangs des rechten Rades des Fahrzeugs und eines ermittelten Radiusfehlers und/oder ermittelten Umfangsfehlers des rechten Rades ermittelt und/oder es wird der ermittelte Radius und/oder der ermittelte Umfang des linken Rades des Fahrzeugs anhand eines hinterlegten Radius und/oder hinterlegten Umfangs des linken Rades des Fahrzeugs und eines ermittelten Radiusfehlers und/oder ermittelten Umfangsfehlers des linken Rades ermittelt.

Die hinterlegten Radien für das rechte und linke Rade beziehen sich ebenso wie die ermittelten Radien insbesondere auf die dynamischen Rollradien.

Entsprechend zumindest einer Ausführungsform wird der ermittelte Radiusfehler und/oder der ermittelte Umfangsfehler des rechten Rades des Fahrzeugs und/oder der hinterlegte Radius des rechten Rades und/oder der hinterlegte Umfang des rechten Rades des Fahrzeugs und/oder der ermittelte Radiusfehler des linken Rades und/oder der ermittelte Umfangsfehler des linken Rades des Fahrzeugs und/oder der hinterlegte Radius des linken Rades und/oder der hinterlegte Umfang des linken Rades des Fahrzeugs zur Verwendung in einer nachfolgenden Iteration des Kalman-Filters auf Basis eines während des Korrekturschritts des Kalman-Filters ermittelten Residuums und/oder einer Kalman-Verstärkung korrigiert. Somit kann der Radius und/oder Umfang der Räder eines Fahrzeugs mit verbesserter Genauigkeit ermittelt werden, wodurch die zurückgelegte Wegstrecke und die Positionserfassung bzw. Geschwindigkeitserfassung genauer bestimmbar ist. Bei einem üblichen Personenkraftwagen können entsprechend die jeweiligen Umfänge zumindest eines der vier Räder ermittelt werden.

Entsprechend zumindest einer Ausführungsform basiert der Prädiktionsschritt auf einem nichtlinearen Bewegungsmodell basiert und/oder der Korrekturschritt auf einem linearen Messmodell.

Erfindungsgemäß hat der Zustandsvektor $\hat{x}$ zur Beschreibung eines Zustands des Fahrzeugs dabei folgende Ausgestaltung:

$$\hat{x} = \begin{bmatrix} x & y & \psi & \delta_R & \delta_L & \Delta S \end{bmatrix}^T$$

mit:

$x$     Fahrzeugposition in Odometriekoordinaten bezüglich einer X-Achse eines zugrunde gelegten Koordinatensystems;

$y$     Fahrzeugposition in Odometriekoordinaten bezüglich der Y-Achse;

$\psi$     Gierwinkel (Yaw) des Fahrzeugs;

$\delta_R$     Radiusfehler zwischen dem aktuellen ermittelten Radius des rechten insbesondere hinteren Rades und dem hinterlegten Radius des rechten insbesondere hinteren Rades;

$\delta_L$     Radiusfehler zwischen dem aktuellen ermittelten Radius des linken insbesondere hinteren Rades und dem hinterlegten Radius des linken insbesondere hinteren Rades; und

$\Delta S$     Unter Heranziehung von GNSS erfasste gefahrene Wegstrecke

Entsprechend wenigstens einer Ausführungsform ist das nichtlineare Bewegungsmodell $f$ folgendermaßen ausgebildet:

$$f = \begin{bmatrix} x_{k|k-1} \\ y_{k|k-1} \\ \psi_{k|k-1} \\ \delta_{R,k|k-1} \\ \delta_{L,k|k-1} \\ \Delta S_{k|k-1} \end{bmatrix} = \begin{bmatrix} x_{k-1|k-1} + \Delta s_k \cos\left(\psi_{k-1|k-1} + \dfrac{\Delta\psi_k}{2}\right) \\ y_{k-1|k-1} + \Delta s_k \sin\left(\psi_{k-1|k-1} + \dfrac{\Delta\psi_k}{2}\right) \\ \psi_{k-1|k-1} + \Delta\psi_k \\ \delta_{R,k-1|k-1} \\ \delta_{L,k-1|k-1} \\ \Delta S_{k-1|k-1} + \Delta s_k \end{bmatrix}$$

mit:

$$\Delta s_k = \frac{1}{2}\Big(\Delta\theta_{R,k}\big(r_{R,s} + \delta_{R,k}\big) + \Delta\theta_{L,k}\big(r_{L,s} + \delta_{L,k}\big)\Big)$$

$$\Delta\psi_k = \frac{1}{L_{TW}}\Big(\Delta\theta_{R,k}\big(r_{R,s} + \delta_{R,k}\big) - \Delta\theta_{L,k}\big(r_{L,s} + \delta_{L,k}\big)\Big)$$

$$\delta_R \triangleq r_{R,a} - r_{R,s}$$

$$\delta_L \triangleq r_{L,a} - r_{L,s}$$

$$r_{R,e} = r_{R,s} + \delta_R$$

$$r_{L,e} = r_{L,s} + \delta_L$$

$\Delta s$      Unter Heranziehung von Odometrie erfasste gefahrene Wegstrecke;

$L_{TW}$      Abstand zwischen rechtem und linkem Rad, insbeson-dere Hinterrad;

$r_{R,a}$      (unbekannter) realer Radius des rechten insbeson-dere hinteren Rades;

$r_{L,a}$      (unbekannter) realer Radius des linken insbesondere hinteren Rades;

$r_{R,s}$      hinterlegter Radius des rechten insbesondere hinteren Rades;

$r_{L,s}$      hinterlegter Radius des linken insbesondere hinteren Rades;

$r_{R,e}$      ermittelter Radius des rechten insbesondere hinteren Rades;

$r_{L,e}$      ermittelter Radius des linken insbesondere hinteren Rades;

$\Delta\theta_R$      Rotationswinkeländerung des rechten insbesondere hinteren Rades;

$\Delta\theta_L$      Rotationswinkeländerung des linken insbesondere hinteren Rades; und

$\Delta\psi$      Gierwinkeländerung des Fahrzeugs.

Bei den ersten drei Gleichungen des nichtlinearen Bewegungsmodells f handelt es sich um Odometriegleichungen, welche die Änderung der Orientierung des Fahrzeugs zur vorhergehenden Orientierung addieren.

Die Zeilen 1 und 2 des Bewegungsmodells f repräsentieren unter Heranziehung der Orientierungsänderung und der zurückgelegten Wegstrecke die Bewegung in X- und Y-Richtung des betreffenden Koordinatensystems.

Entsprechend einer Ausführungsform wird die Änderung der Orientierung durch Vergleich der Abrollstrecke des rechten und linken Rades der Hinterachse ermittelt. Während einer Kurvenfahrt ist die Abrollstrecke des bezüglich der Kurve inneren Rades des Fahrzeugs geringer als die des äußeren Rades. Bei einer Linkskurve ist somit die Strecke, die das linke Rad abrollt, geringer als die Strecke, die das rechte Rad abrollt.

Die Zeilen 4 und 5 des Bewegungsmodells f repräsentieren die Abweichungen des jeweiligen Radumfangs eines linken und rechten hinteren Rades des Fahrzeugs im Vergleich zu den gespeicherten Radumfängen. Die Abweichungen und die gespeicherten Radumfänge ermöglichen die Ermittlung der aktuellen tatsächlichen Radumfänge.

Die letzte Zeile, Zeile 6, des Bewegungsmodells f stellt die Änderung der gefahrenen Wegstrecke insbesondere auf Basis der Signale der Raddrehzahlsensoren dar. $\Delta S$ beschreibt dabei die insbesondere unter Verwendung eines GNSS ermittelte Änderung der gefahrenen Wegstrecke.

Rotationswinkeländerungen eines Rades beim Abrollen und die Drehzahl eines Rades können unter Verwendung eines Raddrehzahlsensors erfasst werden, welcher beispielsweise durch einen Encoder getriggerte Signale ausgeben kann. Ein Ausgangssignal eines Encoders kann beispielsweise ein Rechtecksignal oder ein Sinussignal beschreiben. Somit kann eine Erfassung einer Winkeländerung eines Rades durch Zählen der Anzahl der Pulse im Verhältnis zur Gesamtzahl der Pulse bei einer Umdrehung des Rades ermöglicht werden. Die Genauigkeit der Erfassung der Winkeländerung ist hierbei in Abhängigkeit der Auflösung des Encoders.

Grundsätzlich kann für eine Bestimmung eines Umfangs eines Rades C beispielsweise die zurückgelegte Wegstrecke S mit einem Verhältnis aus der Anzahl der erfassten Pulse n eines Raddrehzahlsensorsignals und der Gesamtanzahl der Pulse bei einer Umdrehung des Rades $N_{tics}$ verrechnet, insbesondere multipliziert, werden. Der Zusammenhang zwischen Radumfang C, zurückgelegter Wegstrecke S und der Rotationswinkeländerung aus dem Verhältnis aus der Anzahl der erfassten Pulse n eines Raddrehzahlsensorsignals und der Gesamtanzahl der Pulse bei einer Umdrehung des Rades $N_{tics}$ kann somit folgendermaßen dargestellt werden:

$$C = \frac{S \cdot N_{tics}}{n}$$

Die Rotationswinkeländerung eines Rades kann hiernach wie folgt ermittelt werden:

$$\Delta\theta = 2\pi \cdot \left(\frac{n}{N_{tics}}\right)$$

Damit kann der Radius r, insbesondere der dynamische Rollradius, eines Rades ermittelt werden:

$$C = 2\pi \frac{S}{\Delta\theta} = 2\pi \cdot r$$

$$S = \Delta\theta \cdot r$$

Die Abstände der erfassten GNSS Positionen können wie bereits beschrieben ermittelt und anschließend mit den mittels Raddrehzahlsensoren erfassten Weg fusioniert werden.

Entsprechend zumindest einer Ausführungsform erfolgt ein Ermitteln einer zurückgelegten Wegstrecke auf Basis eines Radius des rechten Rades unter Heranziehung des erfassten örtlichen Abstands und der Rotationswinkeländerungen des rechten Rades des Fahrzeugs und/oder ein Ermitteln eines Radius des linken Rades unter Heranziehung des erfassten örtlichen Abstands und der Rotationswinkeländerungen des linken Rades des Fahrzeugs.

Entsprechend zumindest einer Ausführungsform erfolgt ein Ermitteln des Umfangs des linken Rades des Fahrzeugs unter Heranziehung der erfassten zurückgelegten Wegstrecke und der Rotationswinkeländerung des linken Rades des Fahrzeugs beim Abrollen des linken Rades des Fahrzeugs über die zurückgelegte Wegstrecke und/oder ein Ermitteln des Umfangs des rechten Rades des Fahrzeugs unter Heranziehung der erfassten zurückgelegten Wegstrecke und der Rotationswinkeländerung des rechten Rades des Fahrzeugs beim Abrollen des rechten Rades des Fahrzeugs über die zurückgelegte Wegstrecke.

Entsprechend wenigstens einer Ausführungsform findet für die Berechnungen ein nichtlineares Kalman-Filter Anwendung, da das verwendete Prädiktionsmodell nichtlinear ist. Insbesondere werden ein Extended Kalman Filter (EKF) oder Unscented Kalman Filter (UKF) oder ein Partikel-Filter herangezogen. Im Hinblick auf die Komplexität sowie den Anspruch an Rechenressourcen und Speicherbedarf sind EKF und UKF besonders vorteilhaft.

EKF

Prädiktion:

$$\hat{x}_{k|k-1} = f\left(\hat{x}_{k-1|k-1}, u_k, w_k, \lambda_k\right) = f\left(\hat{x}_{k-1|k-1}, u_k, 0,0\right)$$

$$P_{k|k-1} = A_k P_{k-1|k-1} A_k^T + B_k U_k B_k^T + Q_k$$

$w$     Zeitlich unkorreliertes Prozess- bzw. Systemrauschen

$Q$     Kovarianz des Prozess- bzw. Systemrauschens

$u$     Deterministische Störung bzw. Eingangsstörung

$U$     Kovarianz der deterministischen Störung bzw. Eingangsstörung

$\lambda$     Mittelwert des weißen Eingangsrauschens

$$u_k = \begin{bmatrix} \Delta\theta_{R,k} & \Delta\theta_{L,k} \end{bmatrix}^T$$

$$U_k = \begin{bmatrix} \sigma^2_{\Delta\theta_R} & 0 \\ 0 & \sigma^2_{\Delta\theta_L} \end{bmatrix}$$

Der Prädiktionsschritt des EKF erfordert die Berechnung der Jacobi-Matrix A des Zustandsvektors $\hat{x}_{k-1|k-1}$ sowie die Jacobi-Matrix B der Eingangsstörung $u_k$, welche die ersten partiellen Ableitungen der Argumente umfasst.

Als Eingangswerte für die Korrektur der Jacobi-Matrizen dienen insbesondere die Rotationswinkeländerungen des hinteren rechten $\Delta\theta_R$ und hinteren linken Rades $\Delta\theta_L$, die Gierwinkeländerung $\Delta\psi$, beispielsweise aus einem Differentialmodell, sowie die erfasste Änderung der Odometrie $\Delta s$.

Jacobi-Matrix des Zustandsvektors:

$$A_{[i,j]} = \frac{\partial f_{[i]}}{\partial \hat{x}_{[j]}} \left( \hat{x}_{k-1|k-1}, u_k, 0, 0 \right)$$

$$A_k = \begin{bmatrix} \dfrac{\partial f_x}{\partial x_{k-1}} & \dfrac{\partial f_x}{\partial y_{k-1}} & \dfrac{\partial f_x}{\partial \psi_{k-1}} & \dfrac{\partial f_x}{\partial \delta_{R,k-1}} & \dfrac{\partial f_x}{\partial \delta_{L,k-1}} & \dfrac{\partial f_x}{\partial \Delta S_{k-1}} \\[2ex] \dfrac{\partial f_y}{\partial x_{k-1}} & \dfrac{\partial f_y}{\partial y_{k-1}} & \dfrac{\partial f_y}{\partial \psi_{k-1}} & \dfrac{\partial f_y}{\partial \delta_{R,k-1}} & \dfrac{\partial f_y}{\partial \delta_{L,k-1}} & \dfrac{\partial f_y}{\partial \Delta S_{k-1}} \\[2ex] \dfrac{\partial f_\psi}{\partial x_{k-1}} & \dfrac{\partial f_\psi}{\partial y_{k-1}} & \dfrac{\partial f_\psi}{\partial \psi_{k-1}} & \dfrac{\partial f_\psi}{\partial \delta_{R,k-1}} & \dfrac{\partial f_\psi}{\partial \delta_{L,k-1}} & \dfrac{\partial f_\psi}{\partial \Delta S_{k-1}} \\[2ex] \dfrac{\partial f_{\delta_R}}{\partial x_{k-1}} & \dfrac{\partial f_{\delta_R}}{\partial y_{k-1}} & \dfrac{\partial f_{\delta_R}}{\partial \psi_{k-1}} & \dfrac{\partial f_{\delta_R}}{\partial \delta_{R,k-1}} & \dfrac{\partial f_{\delta_R}}{\partial \delta_{L,k-1}} & \dfrac{\partial f_{\delta_R}}{\partial \Delta S_{k-1}} \\[2ex] \dfrac{\partial f_{\delta_L}}{\partial x_{k-1}} & \dfrac{\partial f_{\delta_L}}{\partial y_{k-1}} & \dfrac{\partial f_{\delta_L}}{\partial \psi_{k-1}} & \dfrac{\partial f_{\delta_L}}{\partial \delta_{R,k-1}} & \dfrac{\partial f_{\delta_L}}{\partial \delta_{L,k-1}} & \dfrac{\partial f_{\delta_L}}{\partial \Delta S_{k-1}} \\[2ex] \dfrac{\partial f_{\Delta S}}{\partial x_{k-1}} & \dfrac{\partial f_{\Delta S}}{\partial y_{k-1}} & \dfrac{\partial f_{\Delta S}}{\partial \psi_{k-1}} & \dfrac{\partial f_{\Delta S}}{\partial \delta_{R,k-1}} & \dfrac{\partial f_{\Delta S}}{\partial \delta_{L,k-1}} & \dfrac{\partial f_{\Delta S}}{\partial \Delta S_{k-1}} \end{bmatrix}$$

Mit:

$$\frac{\partial f_x}{\partial x_{k-1}} = \frac{\partial f_y}{\partial y_{k-1}} = \frac{\partial f_\psi}{\partial \psi_{k-1}} = \frac{\partial f_{\delta_R}}{\partial \delta_{R,k-1}} = \frac{\partial f_{\delta_L}}{\partial \delta_{L,k-1}} = \frac{\partial f_{\Delta S}}{\partial \Delta S_{k-1}} = 1$$

$$\frac{\partial f_x}{\partial \psi_{k-1}} = -\frac{\Delta s_k}{2} \sin\left( \psi_{k-1} + \frac{\Delta\psi_k}{2} \right)$$

$$\frac{\partial f_y}{\partial \psi_{k-1}} = \frac{\Delta s_k}{2} \cos\left( \psi_{k-1} + \frac{\Delta\psi_k}{2} \right)$$

$$\frac{\partial f_x}{\partial \delta_{R,k-1}} = \frac{\Delta\theta_{R,k}}{2} \cos\left( \psi_{k-1} + \frac{\Delta\psi_k}{2} \right) - \frac{\Delta s_k \Delta\theta_{R,k}}{2 L_{TW}} \sin\left( \psi_{k-1} + \frac{\Delta\psi_k}{2} \right)$$

$$\frac{\partial f_y}{\partial \delta_{R,k-1}} = \frac{\Delta\theta_{R,k}}{2} \sin\left( \psi_{k-1} + \frac{\Delta\psi_k}{2} \right) + \frac{\Delta s_k \Delta\theta_{R,k}}{2 L_{TW}} \cos\left( \psi_{k-1} + \frac{\Delta\psi_k}{2} \right)$$

$$\frac{\partial f_\psi}{\partial \delta_{R,k-1}} = \frac{\Delta\theta_{R,k}}{L_{TW}}$$

$$\frac{\partial f_{\Delta S}}{\partial \delta_{R,k-1}} = \frac{\Delta\theta_{R,k}}{2}$$

$$\frac{\partial f_x}{\partial \delta_{L,k-1}} = \frac{\Delta\theta_{L,k}}{2}\cos\left(\psi_{k-1} + \frac{\Delta\psi_k}{2}\right) + \frac{\Delta s_k \Delta\theta_{L,k}}{2L_{TW}}\sin\left(\psi_{k-1} + \frac{\Delta\psi_k}{2}\right)$$

$$\frac{\partial f_y}{\partial \delta_{L,k-1}} = \frac{\Delta\theta_{L,k}}{2}\sin\left(\psi_{k-1} + \frac{\Delta\psi_k}{2}\right) - \frac{\Delta s_k \Delta\theta_{L,k}}{2L_{TW}}\cos\left(\psi_{k-1} + \frac{\Delta\psi_k}{2}\right)$$

$$\frac{\partial f_\psi}{\partial \delta_{L,k-1}} = -\frac{\Delta\theta_{L,k}}{L_{TW}}$$

$$\frac{\partial f_{\Delta S}}{\partial \delta_{L,k-1}} = \frac{\Delta\theta_{L,k}}{2}$$

$$\frac{\partial f_y}{\partial x_{k-1}} = \frac{\partial f_\psi}{\partial x_{k-1}} = \frac{\partial f_{\delta_R}}{\partial x_{k-1}} = \frac{\partial f_{\delta_L}}{\partial x_{k-1}} = \frac{\partial f_{\Delta S}}{\partial x_{k-1}} = \frac{\partial f_x}{\partial y_{k-1}} = \frac{\partial f_\psi}{\partial y_{k-1}} = \frac{\partial f_{\delta_R}}{\partial y_{k-1}} = \frac{\partial f_{\delta_L}}{\partial y_{k-1}} = \frac{\partial f_{\Delta S}}{\partial y_{k-1}}$$

$$= \frac{\partial f_{\delta_R}}{\partial \psi_{k-1}}$$

$$= \frac{\partial f_{\delta_L}}{\partial \psi_{k-1}} = \frac{\partial f_{\Delta S}}{\partial \psi_{k-1}} = \frac{\partial f_{\delta_L}}{\partial \delta_{R,k-1}} = \frac{\partial f_{\delta_R}}{\partial \delta_{L,k-1}} = \frac{\partial f_x}{\partial \Delta S_{k-1}} = \frac{\partial f_y}{\partial \Delta S_{k-1}} = \frac{\partial f_\psi}{\partial \Delta S_{k-1}} = \frac{\partial f_{\delta_R}}{\partial \Delta S_{k-1}} = \frac{\partial f_{\delta_L}}{\partial \Delta S_{k-1}}$$

$$= 0$$

Jacobi-Matrix der Eingangsstörung:

$$B_{[i,j]} = \frac{\partial f_{[i]}}{\partial u_{[j]}}\left(\hat{x}_{k-1|k-1}, u_k, 0, 0\right)$$

$$B_k = \begin{bmatrix} \dfrac{\partial f_x}{\partial \Delta\theta_{R,k}} & \dfrac{\partial f_x}{\partial \Delta\theta_{L,k}} \\[2mm] \dfrac{\partial f_y}{\partial \Delta\theta_{R,k}} & \dfrac{\partial f_y}{\partial \Delta\theta_{L,k}} \\[2mm] \dfrac{\partial f_\psi}{\partial \Delta\theta_{R,k}} & \dfrac{\partial f_\psi}{\partial \Delta\theta_{L,k}} \\[2mm] \dfrac{\partial f_{\delta_R}}{\partial \Delta\theta_{R,k}} & \dfrac{\partial f_{\delta_R}}{\partial \Delta\theta_{L,k}} \\[2mm] \dfrac{\partial f_{\delta_L}}{\partial \Delta\theta_{R,k}} & \dfrac{\partial f_{\delta_L}}{\partial \Delta\theta_{L,k}} \\[2mm] \dfrac{\partial f_{\Delta S}}{\partial \Delta\theta_{R,k}} & \dfrac{\partial f_{\Delta S}}{\partial \Delta\theta_{L,k}} \end{bmatrix}$$

Mit:

$$\frac{\partial f_x}{\partial \Delta\theta_{R,k}} = \frac{(r_{R,s} + \delta_{R,k-1})}{2}\cos\left(\psi_{k-1} + \frac{\Delta\psi_k}{2}\right) - \frac{(r_{R,s} + \delta_{R,k-1})\Delta s_k}{2L_{TW}}\sin\left(\psi_{k-1} + \frac{\Delta\psi_k}{2}\right)$$

$$\frac{\partial f_x}{\partial \Delta\theta_{L,k}} = \frac{(r_{L,s} + \delta_{L,k-1})}{2}\cos\left(\psi_{k-1} + \frac{\Delta\psi_k}{2}\right) + \frac{(r_{L,s} + \delta_{L,k-1})\Delta s_k}{2L_{TW}}\sin\left(\psi_{k-1} + \frac{\Delta\psi_k}{2}\right)$$

$$\frac{\partial f_y}{\partial \Delta\theta_{R,k}} = \frac{(r_{R,s} + \delta_{R,k-1})}{2}\sin\left(\psi_{k-1} + \frac{\Delta\psi_k}{2}\right) + \frac{(r_{R,s} + \delta_{R,k-1})\Delta s_k}{2L_{TW}}\cos\left(\psi_{k-1} + \frac{\Delta\psi_k}{2}\right)$$

$$\frac{\partial f_y}{\partial \Delta\theta_{L,k}} = \frac{(r_{L,s} + \delta_{L,k-1})}{2}\sin\left(\psi_{k-1} + \frac{\Delta\psi_k}{2}\right) - \frac{(r_{L,s} + \delta_{L,k-1})\Delta s_k}{2L_{TW}}\cos\left(\psi_{k-1} + \frac{\Delta\psi_k}{2}\right)$$

$$\frac{\partial f_\psi}{\partial \Delta\theta_{R,k}} = \frac{(r_{R,s} + \delta_{R,k-1})}{L_{TW}}$$

$$\frac{\partial f_\psi}{\partial \Delta\theta_{L,k}} = -\frac{(r_{L,s} + \delta_{L,k-1})}{L_{TW}}$$

$$\frac{\partial f_{\Delta S}}{\partial \Delta\theta_{R,k}} = \frac{(r_{R,s} + \delta_{R,k-1})}{2}$$

$$\frac{\partial f_{\Delta S}}{\partial \Delta\theta_{L,k}} = \frac{(r_{L,s} + \delta_{L,k-1})}{2}$$

$$\frac{\partial f_{\delta_R}}{\partial \Delta\theta_{R,k}} = \frac{\partial f_{\delta_R}}{\partial \Delta\theta_{L,k}} = \frac{\partial f_{\delta_L}}{\partial \Delta\theta_{R,k}} = \frac{\partial f_{\delta_L}}{\partial \Delta\theta_{L,k}} = 0$$

Korrektur:

Es handelt sich um einen linearen Korrekturschritt, da das Messmodell linear ausgebildet ist. Somit ist vorteilhafterweise lediglich der Prädiktionsschritt nichtlinear.

Messmodell:

$$z_k = [\Delta S_{k|k}]^T$$

$$H = [0 \quad 0 \quad 0 \quad 0 \quad 0 \quad 1]$$

$$\hat{y}_k = H\hat{x}_{k|k-1} = [0 \quad 0 \quad 0 \quad 0 \quad 0 \quad 1]\begin{bmatrix} x_{k|k-1} \\ y_{k|k-1} \\ \psi_{k|k-1} \\ \delta_{R,k|k-1} \\ \delta_{L,k|k-1} \\ \Delta S_{k|k-1} \end{bmatrix}$$

Kalman-Verstärkung:

$$R = \sigma_{GPS}^2$$

$$K_k = \frac{P_{k|k-1}H^T}{HP_{k|k-1}H^T + R}$$

Innovation (Residuum):

$$v_k = z_k - H\hat{x}_{k|k-1} = z_k - \hat{y}_k$$

Korrektur des Zustandsvektors und der Kovarianz:

$$\hat{x}_{k|k} = \hat{x}_{k|k-1} + K_k v_k$$

$$P_{k|k} = (I - K_k H)P_{k|k-1}$$

Die Zustände $\Delta S_{k|k-1}$, $\delta_{R,k}$ und $\delta_{L,k}$ sind gemäß dem zugrunde gelegten Bewegungsmodell f korreliert. Durch den Korrekturschritt des Kalman-Filters werden somit die Radiusfehler $\delta_{R,k}$ und $\delta_{L,k}$ der Räder im Hinblick auf die insbesondere in einem Datenspeicher hinterlegten Radien $r_{R,s}$ und $r_{L,s}$ der Räder basierend auf dem Residuum in Verbindung mit der Kalman-Verstärkung $K_k$ korrigiert und zur Berechnung des neuen Zustandsvektors $\hat{x}_{k|k}$ aus dem prädizierten Zustandsvektor $\hat{x}_{k|k-1}$ herangezogen.

Entsprechend zumindest einer Ausführungsform werden die Radienfehler $\delta_{R,k}$ und $\delta_{L,k}$ und/oder die hinterlegten Radien $r_{R,s}$ und $r_{L,s}$ auf Basis des ermittelten Residuums $\hat{y}_k$ und/oder der ermittelten Kalman-Verstärkung K korrigiert und insbesondere anschließend zum Heranziehen für einen nachfolgenden Iterationsschritt des Kalman-Filters hinterlegt, insbesondere in einem Datenspeicher gespeichert, werden. Hierdurch kann insbesondere über eine Mehrzahl an Korrekturiterationen eine Näherung der ermittelten Radien $r_{R,e}$, $r_{L,e}$ an die realen Radien $r_{R,a}$, $r_{L,a}$, ggf. mittels korrigierter Radienfehler $\delta_{R,k}$ und $\delta_{L,k}$, ermöglicht werden. Im Hinblick darauf, dass die ermittelten sowie hinterlegten Radien insbesondere die dynamischen Rollradien betreffen, trifft dies dementsprechend zweckmäßigerweise auch auf die realen Radien, auf die hier Bezug genommen wird zu. In dieser Weise könnte mittels des Kalman-Filters eine Minimierung eines Fehlers bzw. einer Differenz $\delta_R$ realisiert werden zwischen dem aktuellen ermittelten Radius $r_{R,e}$ des rechten hinteren Rades und dem hinterlegten Radius $r_{R,s}$ des rechten hinteren Rades sowie eines Fehlers bzw. einer Differenz $\delta_L$ zwischen dem aktuellen ermittelten Radius $r_{L,e}$ des linken hinteren Rades und dem hinterlegten Radius $r_{L,s}$ des linken hinteren Rades.

Die erfasste Änderung der gefahrenen Wegstrecke $\Delta S$ wird mit jeder zeitlich neuen GNSS Messung entsprechend wenigstens einer Ausführungsform nach Ausführung des Korrekturschritts des Kalman-Filters weiterbildungsgemäß zurückgesetzt, insbesondere auf null. Hierdurch wird eine Kumulation von Fehlern über mehrere Iterationen des Kalman-Filters bei der Erfassung der absoluten Positionen vermieden.

Entsprechend zumindest einer Ausführungsform werden die ermittelte gefahrene Wegstrecke und/oder unter Heranziehung der ermittelten gefahrene Wegstrecke bestimmte Positionsinformationen des Fahrzeugs zur Verwendung durch ein zumindest teilweise automatisiertes Fahrkontrollsystem bereitgestellt.

Gemäß einem zweiten Aspekt der Offenbarung wird eine elektronische Kontrollvorrichtung zum Ermitteln einer gefahrenen Wegstrecke gemäß Anspruch 10 beschrieben.

Gemäß einem weiteren Aspekt der Offenbarung ist die elektronische Kontrollvorrichtung eingerichtet, ein Verfahren nach wenigstens einem der Ansprüche 2 - 9 auszuführen.

Entsprechend zumindest einer Ausführungsform umfasst die elektronische Kontrollvorrichtung eine Recheneinrichtung zur Datenverarbeitung. Eine Recheneinrichtung kann jedwede Einrichtung sein, die ausgebildet ist, um zumindest eines der genannten Signale zu verarbeiten. Insbesondere kann die Recheneinrichtung ein Prozessor, beispielsweise ein ASIC, ein FPGA, ein digitaler Signalprozessor, ein Hauptprozessor (CPU von engl.: "Central Processing Unit"), ein Multizweckprozessor (MPP von engl.: "Multi Purpose Prozessor") oder Ähnliches sein.

[BESCHREIBUNG DER FIGUREN]

Einige Ausgestaltungen des Verfahrens bzw. der elektronischen Kontrollvorrichtung sind in den Unteransprüchen angegeben. Weitere Ausführungsformen ergeben sich auch aus der nachfolgenden Beschreibung von Ausführungsbeispielen an Hand von Figuren.

In schematischer Darstellung zeigen:

Fig. 1    eine Ausführungsform des Verfahrens 100 zum Ermitteln einer gefahrenen Wegstrecke eines Fahrzeugs 300 gemäß einem ersten Aspekt der Offenbarung, und

Fig. 2     zeigt eine Ausführungsform der elektronischen Kontrollvorrichtung 200 des Fahrzeugs 300 zum Ermitteln einer gefahrenen Wegstrecke des Fahrzeugs 300 gemäß einem zweiten Aspekt der Offenbarung.

[DETAILLIERTE BESCHREIBUNG DER FIGUREN]

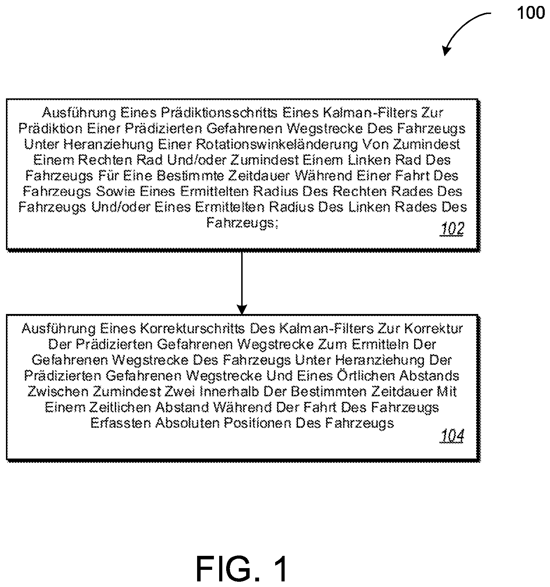

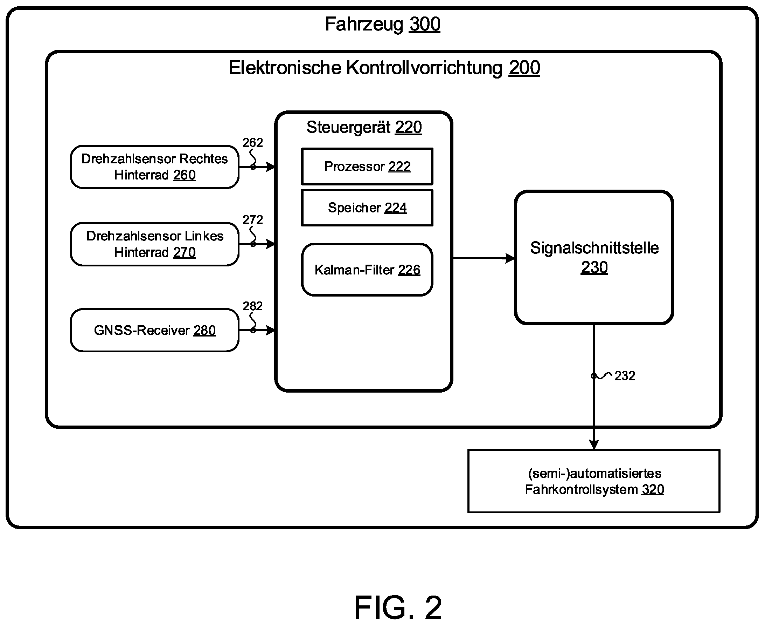

Die Fig. 1 zeigt eine Ausführungsform des Verfahrens 100 zum Ermitteln einer gefahrenen Wegstrecke, insbesondere mittels einer elektronischen Kontrollvorrichtung 200 gemäß Fig. 2, eines Fahrzeugs 300 gemäß einem ersten Aspekt der Offenbarung, wobei in einem Schritt 102 eine Ausführung eines Prädiktionsschritts eines Kalman-Filters 226 zur Prädiktion einer prädizierten gefahrenen Wegstrecke des Fahrzeugs 300 unter Heranziehung einer Rotationswinkeländerung von zumindest einem rechten Rad und/oder zumindest einem linken Rad des Fahrzeugs 300 für eine bestimmte Zeitdauer während einer Fahrt des Fahrzeugs 300 sowie eines ermittelten Radius des rechten Rades und/oder ermittelten Umfangs des rechten Rades des Fahrzeugs 300 und/oder eines ermittelten Radius des linken Rades und/oder ermittelten Umfangs des linken Rades des Fahrzeugs 300 vorgenommen wird. In einem Schritt 104 erfolgt eine Ausführung eines Korrekturschritts des Kalman-Filters 226 zur Korrektur der prädizierten gefahrenen Wegstrecke zum Ermitteln der gefahrenen Wegstrecke des Fahrzeugs 300 unter Heranziehung der prädizierten gefahrenen Wegstrecke und eines örtlichen Abstands zwischen zumindest zwei innerhalb der bestimmten Zeitdauer mit einem zeitlichen Abstand während der Fahrt des Fahrzeugs 300 erfassten absoluten Positionen des Fahrzeugs 300.

Die Fig. 2 zeigt eine Ausführungsform der elektronischen Kontrollvorrichtung 200 des Fahrzeugs 300 zum Ermitteln einer gefahrenen Wegstrecke des Fahrzeugs 300 gemäß einem zweiten Aspekt der Offenbarung, wobei die Kontrollvorrichtung 200 konfiguriert ist ein Verfahren 100 wie anhand von Fig. 1 beschrieben auszuführen. Hierzu weist die elektronische Kontrollvorrichtung 200 ein Steuergerät 220 zur Ausführung eines Prädiktionsschritts eines Kalman-Filters 226 auf, wobei mittels des Prädiktionsschritts eine Prädiktion einer prädizierten gefahrenen Wegstrecke des Fahrzeugs 300 unter Heranziehung einer Rotationswinkeländerung von zumindest einem rechten Rad und/oder zumindest einem linken Rad des Fahrzeugs 300 für eine bestimmte Zeitdauer während einer Fahrt des Fahrzeugs 300 sowie eines ermittelten Radius des rechten Rades und/oder ermittelten Umfangs des rechten Rades des Fahrzeugs und/oder eines ermittelten Radius des linken Rades und/oder ermittelten Umfangs des linken Rades des Fahrzeugs 300 vorgenommen wird. Die Räder des Fahrzeugs 300 sind in Fig. 2 nicht separat dargestellt. Rotationswinkeländerungen eines Rades beim Abrollen und die Drehzahl eines Rades können unter Verwendung eines jeweiligen einem Rad zugeordneten Raddrehzahlsensors 260, 270 erfasst werden, welche beispielsweise durch einen Encoder getriggerte Signale 262, 272 ausgeben. Ein Ausgangssignal 262, 272 eines Encoders kann beispielsweise ein Rechtecksignal oder ein Sinussignal beschreiben. Somit kann eine Erfassung einer Winkeländerung eines Rades durch Zählen der Anzahl der Pulse im Verhältnis zur Gesamtzahl der Pulse bei einer Umdrehung des Rades ermöglicht werden. Die Genauigkeit der Erfassung der Winkeländerung ist hierbei in Abhängigkeit der Auflösung des Encoders. Beispielsgemäß werden die Signale 262 des Drehzahlsensors des rechten Hinterrades 260 und die Signale 272 des Drehzahlsensors des linken Hinterrades 270 durch das Steuergerät für die Verarbeitung durch das Kalman-Filter 226 herangezogen.

Das Steuergerät 220 ist weiterhin zur Ausführung eines Korrekturschritts des Kalman-Filters 226 zur Korrektur der prädizierten gefahrenen Wegstrecke zum Ermitteln der gefahrenen Wegstrecke des Fahrzeugs 300 ausgebildet, wofür die prädizierte gefahrenen Wegstrecke und ein örtlichen Abstand zwischen zumindest zwei innerhalb der bestimmten Zeitdauer mit einem zeitlichen Abstand während der Fahrt des Fahrzeugs erfassten absoluten Positionen des Fahrzeugs herangezogen werden. Unter absoluten Positionen, welche insbesondere unter Verwendung des GNSS-Receivers 280 zum Empfang von Signalen eines Globalen Satellitennavigationssystems (GNSS) ermittelt werden, seien insbesondere Positionen in Koordinaten eines globalen Koordinatensystems, wie beispielsweise WGS84, verstanden. Odometriekoordinaten sind im Unterschied hierzu häufig in einem lokalen Fahrzeugkoordinatensystem dargestellt. Die mittels des GNSS-Receiver 280 erfassten Daten 282 werden dem Steuergerät 220 bereitgestellt. Zur Erfassung von Odometriedaten kann die elektronische Kontrollvorrichtung 200 zur Erfassung von Odometrie geeignete Sensoren aufweisen, beispielsweise Beschleunigungssensoren und/oder Gierratensensoren.

Gemäß einem weiteren Aspekt der Offenbarung ist die elektronische Kontrollvorrichtung 200 eingerichtet, ein Verfahren nach wenigstens einem der beschriebenen Ausführungsformen der Offenbarung durchzuführen.

Entsprechend zumindest einer Ausführungsform umfasst die elektronische Kontrollvorrichtung 200 bzw. das Steuergerät 220 einen Prozessor 222 zur Datenverarbeitung. In einer Weiterbildung der angegebenen Vorrichtung 200 weist die angegebene Vorrichtung 200 einen Datenspeicher 224 auf. Dabei ist das angegebene Verfahren in Form eines Computerprogramms in dem Speicher 224 hinterlegt und der Prozessor 222 zur Ausführung des Verfahrens vorgesehen, wenn das Computerprogramm aus dem Speicher in die Recheneinrichtung geladen ist. Gemäß einem weiteren Aspekt der Erfindung umfasst ein Computerprogramm Programmcodemittel, um alle Schritte eines der angegebenen Verfahren durchzuführen, wenn das Computerprogramm durch die Vorrichtung 200 ausgeführt wird. Das Kalman-Filter 226 wird insbesondere mittels des Prozessors 222 ausgeführt.

Das Steuergerät 220 ist entsprechend zumindest einer Ausführungsform ausgebildet Signale 232, insbeson-

dere die ermittelte gefahrene Wegstrecke und/oder Positionsinformationen des Fahrzeugs, mittels einer Signalschnittstelle 230 an eine weitere elektronische Kontrollvorrichtung des Fahrzeug 300, beispielsweise zur Ausführung eines Fahrerassistenzsystems bzw. zur (semi-)automatisierten Fahrkontrolle 320, wie insbesondere eine automatisierte Parkassistenz, auszugeben. Die elektronische Kontrollvorrichtung 200 bzw. das Steuergerät 220 bzw. das Verfahren 100 kann entsprechend wenigstens einer Ausführungsform auch integraler Bestandteil eines betreffenden (semi-)automatisierten Fahrsystems 320 insbesondere in der Weise sein, dass auch die (semi-)automatisierten Fahrkontrollen mittels der elektronischen Kontrollvorrichtung 200 ausgeführt werden.

**Patentansprüche**

1. Verfahren (100) zum Ermitteln einer gefahrenen Wegstrecke eines Fahrzeugs (300), aufweisend die Schritte:

    - Ausführung (102) eines Prädiktionsschritts eines Kalman-Filters (226) zur Prädiktion einer prädizierten gefahrenen Wegstrecke des Fahrzeugs (300) unter Heranziehung einer Rotationswinkeländerung von zumindest einem rechten Rad und/oder zumindest einem linken Rad des Fahrzeugs (300) für eine bestimmte Zeitdauer während einer Fahrt des Fahrzeugs sowie eines ermittelten Radius des rechten Rades und/oder ermittelten Umfangs des rechten Rades des Fahrzeugs (300) und/oder eines ermittelten Radius des linken Rades und/oder ermittelten Umfangs des linken Rades des Fahrzeugs (300);
    - Ausführung (104) eines Korrekturschritts des Kalman-Filters (226) zur Korrektur der prädizierten gefahrenen Wegstrecke zum Ermitteln der gefahrenen Wegstrecke des Fahrzeugs (300) unter Heranziehung der prädizierten gefahrenen Wegstrecke und eines örtlichen Abstands zwischen zumindest zwei innerhalb der bestimmten Zeitdauer mit einem zeitlichen Abstand während der Fahrt des Fahrzeugs (300) erfassten absoluten Positionen des Fahrzeugs (300); **gekennzeichnet dadurch, dass**
    - ein Zustandsvektor $\hat{x}$ zur Beschreibung eines Zustands des Fahrzeugs folgende Ausgestaltung hat:

    $$\hat{x} = \begin{bmatrix} x & y & \psi & \delta_R & \delta_L & \Delta S \end{bmatrix}^T$$

    mit:

    $x$ Fahrzeugposition in Odometriekoordinaten bezüglich einer X-Achse eines zugrunde gelegten Koordinatensystems;
    $y$ Fahrzeugposition in Odometriekoordinaten bezüglich einer Y-Achse eines zugrunde gelegten Koordinatensystems;
    $\psi$ Gierwinkel (Yaw) des Fahrzeugs;
    $\delta_R$ Radiusfehler zwischen einem ermittelten Radius eines rechten Rades und dem hinterlegten Radius des rechten Rades;
    $\delta_L$ Radiusfehler zwischen einem ermittelten Radius des linken Rades und dem hinterlegten Radius des linken Rades; und
    $\Delta S$ Unter Heranziehung von mittels eines Globalen Satellitennavigationssystems erfasste gefahrene Wegstrecke.

2. Verfahren gemäß Anspruch 1, wobei der ermittelte Radius des rechten Rades und/oder der ermittelte Umfang des rechten Rades des Fahrzeugs anhand eines hinterlegten Radius des rechten Rades und/oder hinterlegten Umfangs des rechten Rades des Fahrzeugs und eines ermittelten Radiusfehlers des rechten Rades und/oder ermittelten Umfangsfehlers des rechten Rades des Fahrzeugs ermittelt wird und/oder der ermittelte Radius des linken Rades und/oder ermittelte Umfang des linken Rades des Fahrzeugs anhand eines hinterlegten Radius des linken Rades und/oder hinterlegten Umfangs des linken Rades des Fahrzeugs und eines ermittelten Radiusfehlers des linken Rades und/oder ermittelten Umfangsfehlers des linken Rades des Fahrzeugs ermittelt wird.

3. Verfahren gemäß Anspruch 2, wobei der ermittelte Radiusfehler des rechten Rades und/oder der ermittelte Umfangsfehler des rechten Rades des Fahrzeugs und/oder der hinterlegte Radius des rechten Rades und/oder der hinterlegte Umfang des rechten Rades des Fahrzeugs und/oder der ermittelte Radiusfehler des linken Rades und/oder der ermittelte Umfangsfehler des linken Rades des Fahrzeugs und/oder der hinterlegte Radius des linken Rades und/oder der hinterlegte Umfang des linken Rades des Fahrzeugs zur Verwendung in einer nachfolgenden Iteration des Kalman-Filters auf Basis eines während des Korrekturschritts des Kalman-Filters ermittelten Residuums und/oder einer Kalman-Verstärkung korrigiert werden.

4. Verfahren gemäß wenigstens einem der vorhergehenden Ansprüche, wobei der Prädiktionsschritt auf einem nichtlinearen Bewegungsmodell basiert und/oder der Korrekturschritt auf einem linearen Messmodell basiert.

5. Verfahren gemäß Anspruch 4, wobei das nichtlineare Bewegungsmodell $f$ folgendermaßen ausgebildet ist:

$$f = \begin{bmatrix} x_{k|k-1} \\ y_{k|k-1} \\ \psi_{k|k-1} \\ \delta_{R,k|k-1} \\ \delta_{L,k|k-1} \\ \Delta S_{k|k-1} \end{bmatrix} = \begin{bmatrix} x_{k-1|k-1} + \Delta s_k \cos\left(\psi_{k-1|k-1} + \frac{\Delta\psi_k}{2}\right) \\ y_{k-1|k-1} + \Delta s_k \sin\left(\psi_{k-1|k-1} + \frac{\Delta\psi_k}{2}\right) \\ \psi_{k-1|k-1} + \Delta\psi_k \\ \delta_{R,k-1|k-1} \\ \delta_{L,k-1|k-1} \\ \Delta S_{k-1|k-1} + \Delta s_k \end{bmatrix}$$

mit:

$\Delta s$ Unter Heranziehung von Odometrie erfasste gefahrene Wegstrecke;
$L_{TW}$ Abstand zwischen rechtem und linkem Rad;
$r_{R,a}$ realer Radius des rechten Rades;
$r_{L,a}$ realer Radius des linken Rades;
$r_{R,s}$ hinterlegter Radius des rechten Rades;
$r_{L,s}$ hinterlegter Radius des linken Rades;
$r_{R,e}$ ermittelter Radius des rechten Rades;
$r_{L,e}$ ermittelter Radius des linken Rades;
$\Delta\theta_R$ Rotationswinkeländerung des rechten Rades;
$\Delta\theta_L$ Rotationswinkeländerung des linken Rades;
$\Delta\psi$ Gierwinkeländerung des Fahrzeugs.

6. Verfahren gemäß Anspruch 5, wobei die unter Heranziehung der Odometrie erfasste gefahrene Wegstrecke ($\Delta s$) und/oder die Gierwinkeländerung des Fahrzeugs ($\Delta\psi$) des nichtlinearen Bewegungsmodells wie folgt ermittelt werden:

$$\Delta s_k = \frac{1}{2}\left(\Delta\theta_{R,k}\left(r_{R,s} + \delta_{R,k}\right) + \Delta\theta_{L,k}\left(r_{L,s} + \delta_{L,k}\right)\right)$$

und/oder

$$\Delta\psi_k = \frac{1}{L_{TW}}\left(\Delta\theta_{R,k}\left(r_{R,s} + \delta_{R,k}\right) - \Delta\theta_{L,k}\left(r_{L,s} + \delta_{L,k}\right)\right)$$

7. Verfahren gemäß wenigstens einem der vorhergehenden Ansprüche 4 bis 6, wobei das lineare Messmodell des Korrekturschritts des Kalman-Filters folgendermaßen ausgebildet ist:

$$z_k = \left[\Delta S_{k|k}\right]^T,$$

wobei
$\Delta S$ die mittels eines Globalen Satellitennavigationssystem ermittelte gefahrene Wegstrecke beschreibt.

8. Verfahren gemäß wenigstens einem der vorhergehenden Ansprüche, wobei die mittels eines Globalen Satellitennavigationssystem erfasste gefahrene Wegstrecke ($\Delta S$) mit einer zeitlich neuen GNSS-Messung nach Ausführung des Korrekturschritts des Kalman-Filters zurückgesetzt wird.

9. Verfahren gemäß wenigstens einem der vorhergehenden Ansprüche, wobei die ermittelte gefahrene Wegstrecke und/oder unter Heranziehung der ermittelten gefahrene Wegstrecke bestimmte Positionsinformationen des Fahrzeugs zur Verwendung durch ein zumindest teilweise automatisiertes Fahrkontrollsystem bereitgestellt werden.

10. Elektronische Kontrollvorrichtung (200) zum Ermitteln einer gefahrenen Wegstrecke eines Fahrzeugs (300), wobei die Kontrollvorrichtung (200) konfiguriert ist ein Verfahren auszuführen, aufweisend die Schritte:

- Ausführung (102) eines Prädiktionsschritts eines Kalman-Filters (226) zur Prädiktion einer prädizierten gefahrenen Wegstrecke des Fahrzeugs (300) unter Heranziehung einer Rotationswinkeländerung von zumindest einem rechten Rad und/oder zumindest einem linken Rad des Fahrzeugs (300) für eine bestimmte Zeitdauer während einer Fahrt des Fahrzeugs (300) sowie eines ermittelten Radius des rechten Rades und/oder ermittelten Umfangs des rechten Rades des Fahrzeugs (300) und/oder eines ermittelten Radius des linken Rades und/oder ermittelten Umfangs des linken Rades des Fahrzeugs (300);
- Ausführung (104) eines Korrekturschritts des Kalman-Filters (226) zur Korrektur der prädizierten gefahrenen Wegstrecke zum Ermitteln der gefahrenen Wegstrecke des Fahrzeugs (300) unter Heranziehung der prädizierten gefahrenen Wegstrecke und eines örtlichen Abstands zwischen zumindest zwei innerhalb der bestimmten Zeitdauer mit einem zeitlichen Abstand während der Fahrt des Fahrzeugs (300) erfassten absoluten Positionen des Fahrzeugs (300)

**gekennzeichnet dadurch, dass**

ein Zustandsvektor $\hat{x}$ zur Beschreibung eines Zustands des Fahrzeugs dabei folgende Ausgestaltung hat:

$$\hat{x} = \begin{bmatrix} x & y & \psi & \delta_R & \delta_L & \Delta S \end{bmatrix}^T$$

mit:

$x$ Fahrzeugposition in Odometriekoordinaten bezüglich einer X-Achse eines zugrunde gelegten Koordinatensystems;
$y$ Fahrzeugposition in Odometriekoordinaten bezüglich einer Y-Achse eines zugrunde gelegten Koordinatensystems;
$\psi$ Gierwinkel (Yaw) des Fahrzeugs;
$\delta_R$ Radiusfehler zwischen einem ermittelten Radius eines rechten Rades und dem hinterlegten Radius des rechten Rades;
$\delta_L$ Radiusfehler zwischen einem ermittelten Radius des linken Rades und dem hinterlegten Radius des linken Rades; und
$\Delta S$ Unter Heranziehung von mittels eines Globalen Satellitennavigationssystems erfasste gefahrene Wegstrecke.

11. Elektronische Kontrollvorrichtung gemäß Anspruch 10, wobei die Kontrollvorrichtung konfiguriert ist ein Verfahren gemäß zumindest einem der Ansprüche 2 bis 9 auszuführen.

**Claims**

1. Method (100) for ascertaining a distance travelled by a vehicle (300), having the following steps:

- carrying out (102) a prediction step of a Kalman filter (226) so as to predict a predicted distance travelled by the vehicle (300) using a change in angle of rotation of at least one right wheel and/or at least one left wheel of the vehicle (300) for a specific period of time while the vehicle is travelling and an ascertained radius of the right wheel and/or ascertained circumference of the right wheel of the vehicle (300) and/or an ascertained radius of the left wheel and/or ascertained circumference of the left wheel of the vehicle (300);
- carrying out (104) a correction step of the Kalman filter (226) so as to correct the predicted travelled distance so as to ascertain the distance travelled by the vehicle (300) using the predicted travelled distance and a local distance between at least two absolute positions of the vehicle (300) that are recorded within the specific period of time with a time interval while the vehicle (300) is travelling;
**characterized in that**
- a state vector $\hat{x}$ for describing a state of the vehicle has the following form:

$$\hat{x} = \begin{bmatrix} x & y & \psi & \delta_R & \delta_L & \Delta S \end{bmatrix}^T$$

where:

x vehicle position in odometry coordinates with respect to an X-axis of an underlying coordinate system;
y vehicle position in odometry coordinates with respect to a Y-axis of an underlying coordinate system;
$\psi$ yaw angle (yaw) of the vehicle;
$\delta_R$ radius error between an ascertained radius of a right wheel and the stored radius of the right wheel;
$\delta_L$ radius error between an ascertained radius of the left wheel and the stored radius of the left wheel; and
$\Delta S$ using the travelled distance recorded by way of a global navigation satellite system.

2. Method according to Claim 1, wherein the ascertained radius of the right wheel and/or the ascertained circumference of the right wheel of the vehicle is ascertained based on a stored radius of the right wheel and/or stored circumference of the right wheel of the vehicle and an ascertained radius error of the right wheel and/or ascertained circumference error of the right wheel of the vehicle and/or the ascertained radius of the left wheel and/or ascertained circumference of the left wheel of the vehicle is ascertained based on a stored radius of the left wheel and/or stored circumference of the left wheel of the vehicle and an ascertained radius error of the left wheel and/or ascertained circumference error of the left wheel of the vehicle.

3. Method according to Claim 2, wherein the ascertained radius error of the right wheel and/or the ascertained circumference error of the right wheel of the vehicle and/or the stored radius of the right wheel and/or the stored circumference of the right wheel of the vehicle and/or the ascertained radius error of the left wheel and/or the ascertained circumference error of the left wheel of the vehicle and/or the stored radius of the left wheel and/or the stored circumference of the left wheel of the vehicle are corrected for use in a subsequent iteration of the Kalman filter based on a residual ascertained during the correction step of the Kalman filter and/or a Kalman gain.

4. Method according to at least one of the preceding claims, wherein the prediction step is based on a non-linear motion model and/or the correction step is based on a linear measurement model.

5. Method according to Claim 4, wherein the non-linear motion model f is in the following form:

$$f = \begin{bmatrix} x_{k|k-1} \\ y_{k|k-1} \\ \psi_{k|k-1} \\ \delta_{R,k|k-1} \\ \delta_{L,k|k-1} \\ \Delta S_{k|k-1} \end{bmatrix} = \begin{bmatrix} x_{k-1|k-1} + \Delta s_k \cos\left(\psi_{k-1|k-1} + \dfrac{\Delta\psi_k}{2}\right) \\ y_{k-1|k-1} + \Delta s_k \sin\left(\psi_{k-1|k-1} + \dfrac{\Delta\psi_k}{2}\right) \\ \psi_{k-1|k-1} + \Delta\psi_k \\ \delta_{R,k-1|k-1} \\ \delta_{L,k-1|k-1} \\ \Delta S_{k-1|k-1} + \Delta s_k \end{bmatrix}$$

where:

$\Delta s$ travelled distance recorded using odometry;
$L_{TW}$ distance between right and left wheel;
$r_{R,a}$ real radius of the right wheel;
$r_{L,a}$ real radius of the left wheel;
$r_{R,s}$ stored radius of the right wheel;
$r_{L,s}$ stored radius of the left wheel;
$r_{R,e}$ ascertained radius of the right wheel;
$r_{L,e}$ ascertained radius of the left wheel;
$\Delta\theta_R$ change in angle of rotation of the right wheel;
$\Delta\theta_L$ change in angle of rotation of the left wheel;
$\Delta\psi$ change in yaw angle of the vehicle.

6. Method according to Claim 5, wherein the travelled distance ($\Delta s$) recorded using odometry and/or the change in yaw angle of the vehicle ($\Delta\psi$) of the non-linear motion model are ascertained as follows:

$$\Delta s_k = \frac{1}{2}\left(\Delta\theta_{R,k}\left(r_{R,s} + \delta_{R,k}\right) + \Delta\theta_{L,k}\left(r_{L,s} + \delta_{L,k}\right)\right)$$

and/or

$$\Delta\psi_k = \frac{1}{L_{TW}}\left(\Delta\theta_{R,k}\left(r_{R,s} + \delta_{R,k}\right) - \Delta\theta_{L,k}\left(r_{L,s} + \delta_{L,k}\right)\right)$$

**7.** Method according to at least one of preceding Claims 4 to 6, wherein the linear measurement model of the correction step of the Kalman filter is in the following form:

$$z_k = \left[\Delta S_{k|k}\right]^T,$$

wherein
$\Delta S$ describes the travelled distance ascertained by way of a global navigation satellite system.

**8.** Method according to at least one of the preceding claims, wherein the travelled distance ($\Delta S$) recorded by way of a global navigation satellite system is reset with a chronologically new GNSS measurement after carrying out the correction step of the Kalman filter.

**9.** Method according to at least one of the preceding claims, wherein the ascertained travelled distance and/or position information of the vehicle determined using the ascertained travelled distance is provided for use by an at least partially automated driving control system.

**10.** Electronic control device (200) for ascertaining a distance travelled by a vehicle (300), wherein the control device (200) is configured to carry out a method having the following steps:

- carrying out (102) a prediction step of a Kalman filter (226) so as to predict a predicted distance travelled by the vehicle (300) using a change in angle of rotation of at least one right wheel and/or at least one left wheel of the vehicle (300) for a specific period of time while the vehicle (300) is travelling and an ascertained radius of the right wheel and/or ascertained circumference of the right wheel of the vehicle (300) and/or an ascertained radius of the left wheel and/or ascertained circumference of the left wheel of the vehicle (300);
- carrying out (104) a correction step of the Kalman filter (226) so as to correct the predicted travelled distance so as to ascertain the distance travelled by the vehicle (300) using the predicted travelled distance and a local distance between at least two absolute positions of the vehicle (300) that are recorded within the specific period of time with a time interval while the vehicle (300) is travelling,

**characterized in that**
a state vector $\hat{x}$ for describing a state of the vehicle has the following form:

$$\hat{x} = [x \quad y \quad \psi \quad \delta_R \quad \delta_L \quad \Delta S]^T$$

where:

$x$ vehicle position in odometry coordinates with respect to an X-axis of an underlying coordinate system;
$y$ vehicle position in odometry coordinates with respect to a Y-axis of an underlying coordinate system;
$\psi$ yaw angle (yaw) of the vehicle;
$\delta_R$ radius error between an ascertained radius of a right wheel and the stored radius of the right wheel;
$\delta_L$ radius error between an ascertained radius of the left wheel and the stored radius of the left wheel; and
$\Delta S$ using the travelled distance recorded by way of a global navigation satellite system.

**11.** Electronic control device according to Claim 10, wherein the control device is configured to carry out a method according to at least one of Claims 2 to 9.

**Revendications**

1. Procédé (100) pour l'évaluation d'une distance parcourue d'un véhicule (300), comprenant les étapes consistant à :

- effectuer (102) une étape de prédiction d'un filtre de Kalman (226) pour la prédiction d'une distance prédite parcourue du véhicule (300) à l'aide d'une variation de l'angle de rotation d'au moins une roue droite et/ou d'au moins une roue gauche du véhicule (300) pendant une durée définie au cours d'un déplacement du véhicule ainsi que d'un rayon évalué de la roue droite et/ou d'une circonférence évaluée de la roue droite du véhicule (300) et/ou d'un rayon évalué de la roue gauche et/ou d'une circonférence évaluée de la roue gauche du véhicule (300) ;
- effectuer (104) une étape de correction du filtre de Kalman (226) pour la correction de la distance prédite parcourue pour évaluer la distance parcourue du véhicule (300) à l'aide de la distance prédite parcourue et d'une distance locale entre au moins deux positions absolues du véhicule (300) acquises avec un intervalle de temps au sein de la durée définie au cours du déplacement du véhicule (300) ;
**caractérisé en ce que**
- un vecteur d'état $\hat{x}$ pour la description d'un état du véhicule présente l'expression suivante :

$$\hat{x} = \begin{bmatrix} x & y & \psi & \delta_R & \delta_L & \Delta S \end{bmatrix}^T$$

avec :

$x$ position du véhicule en coordonnées odométriques par rapport à un axe X d'un système de coordonnées sous-jacent ;
$y$ position du véhicule en coordonnées odométriques par rapport à un axe Y d'un système de coordonnées sous-jacent ;
$\psi$ angle de lacet (Yaw) du véhicule ;
$\delta_R$ erreur de rayon entre un rayon évalué d'une roue droite et le rayon enregistré de la roue droite ;
$\delta_L$ erreur de rayon entre un rayon évalué de la roue gauche et le rayon enregistré de la roue gauche ; et
$\Delta S$ distance parcourue évaluée au moyen d'un système mondial de navigation par satellite.

2. Procédé selon la revendication 1, dans lequel le rayon évalué de la roue droite et/ou la circonférence évaluée de la roue droite du véhicule est/sont évalué(e)s à l'aide d'un rayon enregistré de la roue droite et/ou d'une circonférence enregistrée de la roue droite du véhicule et d'une erreur de rayon évaluée de la roue droite et/ou d'une erreur de circonférence évaluée de la roue droite du véhicule, et/ou le rayon évalué de la roue gauche et/ou la circonférence évaluée de la roue gauche du véhicule est/sont évalué(e)s à l'aide d'un rayon enregistré de la roue gauche et/ou d'une circonférence enregistrée de la roue gauche du véhicule et d'une erreur de rayon évaluée de la roue gauche et/ou d'une erreur de circonférence évaluée de la roue gauche du véhicule.

3. Procédé selon la revendication 2, dans lequel l'erreur de rayon évaluée de la roue droite et/ou l'erreur de circonférence évaluée de la roue droite du véhicule et/ou le rayon enregistré de la roue droite et/ou la circonférence enregistrée de la roue droite du véhicule et/ou l'erreur de rayon évaluée de la roue gauche et/ou l'erreur de circonférence évaluée de la roue gauche du véhicule et/ou le rayon enregistré de la roue gauche et/ou la circonférence enregistrée de la roue gauche du véhicule sont corrigés pour une utilisation dans une itération suivante du filtre de Kalman sur la base d'un résidu et/ou d'un gain de Kalman évalué(s) pendant l'étape de correction du filtre de Kalman.

4. Procédé selon au moins l'une des revendications précédentes, dans lequel l'étape de prédiction est basée sur un modèle de mouvement non linéaire et/ou l'étape de correction est basée sur un modèle de mesure linéaire.

5. Procédé selon la revendication 4, dans lequel le modèle de mouvement non linéaire f est conçu comme suit :

$$f = \begin{bmatrix} x_{k|k-1} \\ y_{k|k-1} \\ \psi_{k|k-1} \\ \delta_{R,k|k-1} \\ \delta_{L,k|k-1} \\ \Delta S_{k|k-1} \end{bmatrix} = \begin{bmatrix} x_{k-1|k-1} + \Delta s_k \cos\left(\psi_{k-1|k-1} + \dfrac{\Delta\psi_k}{2}\right) \\ y_{k-1|k-1} + \Delta s_k \sin\left(\psi_{k-1|k-1} + \dfrac{\Delta\psi_k}{2}\right) \\ \psi_{k-1|k-1} + \Delta\psi_k \\ \delta_{R,k-1|k-1} \\ \delta_{L,k-1|k-1} \\ \Delta S_{k-1|k-1} + \Delta s_k \end{bmatrix}$$

avec :

$\Delta s$ distance parcourue évaluée à l'aide de l'odométrie ;
$L_{TW}$ distance entre la roue droite et la roue gauche ;
$r_{R,a}$ rayon réel de la roue droite ;
$r_{L,a}$ rayon réel de la roue gauche ;
$r_{R,s}$ rayon enregistré de la roue droite ;
$r_{L,s}$ rayon enregistré de la roue gauche ;
$r_{R,e}$ rayon évalué de la roue droite ;
$r_{L,e}$ rayon évalué de la roue gauche ;
$\Delta\theta_R$ variation de l'angle de rotation de la roue droite ;
$\Delta\theta_L$ variation de l'angle de rotation de la roue gauche ;
$\Delta\psi$ variation de l'angle de lacet du véhicule.

6. Procédé selon la revendication 5, dans lequel la distance parcourue ($\Delta s$) évaluée à l'aide de l'odométrie et/ou la variation de l'angle de lacet ($\Delta\psi$) du véhicule du modèle de mouvement non linéaire sont déterminées comme suit :

$$\Delta s_k = \frac{1}{2}\left(\Delta\theta_{R,k}\left(r_{R,s} + \delta_{R,k}\right) + \Delta\theta_{L,k}\left(r_{L,s} + \delta_{L,k}\right)\right)$$

et/ou

$$\Delta\psi_k = \frac{1}{L_{TW}}\left(\Delta\theta_{R,k}\left(r_{R,s} + \delta_{R,k}\right) - \Delta\theta_{L,k}\left(r_{L,s} + \delta_{L,k}\right)\right)$$

7. Procédé selon au moins l'une des revendications 4 à 6, dans lequel le modèle de mesure linéaire de l'étape de correction du filtre de Kalman est conçu comme suit :

$$z_k = \left[\Delta S_{k|k}\right]^T,$$

où
$\Delta S$ décrit la distance parcourue déterminée au moyen d'un système mondial de navigation par satellite.

8. Procédé selon au moins l'une des revendications précédentes, dans lequel la distance parcourue ($\Delta S$) détectée au moyen d'un système mondial de navigation par satellite est réinitialisée avec une nouvelle mesure GNSS temporelle après que l'étape de correction du filtre de Kalman a été effectuée.

9. Procédé selon au moins l'une des revendications précédentes, dans lequel la distance parcourue évaluée et/ou les informations de position du véhicule déterminées à l'aide de la distance parcourue évaluée sont fournies pour être utilisées par un système de contrôle de conduite au moins partiellement automatisé.

10. Dispositif de contrôle électronique (200) pour l'évaluation d'une distance parcourue d'un véhicule (300), le dispositif de contrôle (200) étant configuré pour mettre en œuvre un procédé comprenant les étapes consistant à :

- effectuer (102) une étape de prédiction d'un filtre de Kalman (226) pour la prédiction d'une distance prédite parcourue du véhicule (300) à l'aide d'une variation de l'angle de rotation d'au moins une roue droite et/ou d'au moins une roue gauche du véhicule (300) pendant une durée définie au cours d'un déplacement du véhicule (300) ainsi que d'un rayon évalué de la roue droite et/ou d'une circonférence évaluée de la roue droite du véhicule (300) et/ou d'un rayon évalué de la roue gauche et/ou d'une circonférence évaluée de la roue gauche du véhicule (300) ;

- effectuer (104) une étape de correction du filtre de Kalman (226) pour la correction de la distance prédite parcourue pour l'évaluation de la distance parcourue du véhicule (300) à l'aide de la distance prédite parcourue et d'une distance locale entre au moins deux positions absolues du véhicule (300) acquises avec un intervalle de temps au sein de la durée définie au cours du déplacement du véhicule (300),

**caractérisé en ce que**

un vecteur d'état $\hat{x}$ pour la description d'un état du véhicule présente l'expression suivante :

$$\hat{x} = \begin{bmatrix} x & y & \psi & \delta_R & \delta_L & \Delta S \end{bmatrix}^T$$

avec :

$x$ position du véhicule en coordonnées odométriques par rapport à un axe X d'un système de coordonnées sous-jacent ;

$y$ position du véhicule en coordonnées odométriques par rapport à un axe Y d'un système de coordonnées sous-jacent ;

$\psi$ angle de lacet (Yaw) du véhicule ;

$\delta_R$ erreur de rayon entre un rayon évalué d'une roue droite et le rayon enregistré de la roue droite ;

$\delta_L$ erreur de rayon entre un rayon évalué de la roue gauche et le rayon enregistré de la roue gauche ; et

$\Delta S$ distance parcourue évaluée à l'aide d'un système mondial de navigation par satellite.

11. Dispositif de contrôle électronique selon la revendication 10, dans lequel le dispositif de contrôle est configuré pour mettre en œuvre un procédé selon au moins l'une des revendications 2 à 9.

100

Ausführung Eines Prädiktionsschritts Eines Kalman-Filters Zur Prädiktion Einer Prädizierten Gefahrenen Wegstrecke Des Fahrzeugs Unter Heranziehung Einer Rotationswinkeländerung Von Zumindest Einem Rechten Rad Und/oder Zumindest Einem Linken Rad Des Fahrzeugs Für Eine Bestimmte Zeitdauer Während Einer Fahrt Des Fahrzeugs Sowie Eines Ermittelten Radius Des Rechten Rades Des Fahrzeugs Und/oder Eines Ermittelten Radius Des Linken Rades Des Fahrzeugs;

*102*

Ausführung Eines Korrekturschritts Des Kalman-Filters Zur Korrektur Der Prädizierten Gefahrenen Wegstrecke Zum Ermitteln Der Gefahrenen Wegstrecke Des Fahrzeugs Unter Heranziehung Der Prädizierten Gefahrenen Wegstrecke Und Eines Örtlichen Abstands Zwischen Zumindest Zwei Innerhalb Der Bestimmten Zeitdauer Mit Einem Zeitlichen Abstand Während Der Fahrt Des Fahrzeugs Erfassten Absoluten Positionen Des Fahrzeugs

*104*

# FIG. 1

**Fahrzeug 300**

**Elektronische Kontrollvorrichtung 200**

**Steuergerät 220**

Drehzahlsensor Rechtes Hinterrad 260

262

Drehzahlsensor Linkes Hinterrad 270

272

GNSS-Receiver 280

282

Prozessor 222

Speicher 224

Kalman-Filter 226

Signalschnittstelle 230

232

(semi-)automatisiertes Fahrkontrollsystem 320

**FIG. 2**

**IN DER BESCHREIBUNG AUFGEFÜHRTE DOKUMENTE**

**In der Beschreibung aufgeführte Patentdokumente**

- DE 102016103637 A1
- DE 102017002637 A1
- DE 102018222152 A1
- DE 102017011029 A1